# FASCICULE DE BREVET EUROPEEN

(11) **EP 4 405 578 B1**
(45) Date de publication et mention de la délivrance du brevet: **05.11.2025**
(21) Numéro de dépôt: 22789636.2
(22) Date de dépôt: 15.09.2022
(51) Int. Cl.: F02C 3/22, F02C 7/22, F02C 7/25, F02C 7/266, G01N 33/00

(54) **ENSEMBLE DE RÉGULATION DE DIHYDROGÈNE POUR UNE TURBOMACHINE D'AÉRONEF**
DIHYDROGENSTEUERUNGSANORDNUNG FÜR EIN FLUGZEUGTURBINENTRIEBWERK
DIHYDROGEN CONTROL ASSEMBLY FOR AN AIRCRAFT TURBINE ENGINE

(30) Priorité: 22.09.2021 FR 2109968
(43) Date de publication de la demande: 31.07.2024
(73) Titulaire: SAFRAN AIRCRAFT ENGINES, 75015 Paris (FR)
(72) Inventeur: EMPRIN, Yves, 77550 MOISSY-CRAMAYEL (FR); FERT, Jérémy Edmond, 77550 MOISSY-CRAMAYEL (FR)
(74) Mandataire: Regimbeau
(86) Numéro de dépôt international: PCT/FR2022/051737
(87) Numéro de publication internationale: WO 2023/047043

(56) Documents cités:
- DE-A1- 3 004 677
- FR-A1- 3 071 550
- JP-A- 2016 098 783
- US-A- 3 203 651

## Description

### DOMAINE DE L'INVENTION

La présente invention concerne le domaine des turbomachines et plus particulièrement des turbomachines comprenant un circuit de dihydrogène.

### ETAT DE LA TECHNIQUE

Le dihydrogène est appelé à devenir une nouvelle source d'énergie pouvant potentiellement remplacer certaines énergies fossiles.

En effet, contrairement aux énergies fossiles dont la combustion génère du dioxyde de carbone, la combustion de l'hydrogène ne génère que de la vapeur d'eau. A ce titre, le dihydrogène peut être envisagée comme une alternative écologique aux énergies fossiles.

Cependant, le dihydrogène présente plusieurs inconvénients.

D'une part, l'hydrogène moléculaire (i.e. le dihydrogène) est de taille très faible (l'hydrogène est l'atome le plus léger dans la classification périodique des éléments). Sa petite taille rend le dihydrogène gazeux particulièrement apte à fuir par la moindre anfractuosité, et ce quelles que soient les précautions prises pour prévenir les fuites. De plus, le dihydrogène est moins dense que l'air. Ainsi dans l'environnement d'une turbomachine, le dihydrogène fuira très certainement et du fait de sa faible densité, et s'accumulera sous forme de poche gazeuse en certains endroits de la turbomachine.

D'autre part, le dihydrogène est inflammable et explosif sur une très grande plage de concentration (de 4 à 75% de concentration dans l'air). Ainsi, dans le cas d'une turbomachine pour laquelle on voudrait utiliser le dihydrogène comme combustible à la place du kérosène, il y a un risque très important de feu ou de déflagration au sein de la turbomachine.

La combinaison des risques de fuite et de feu ou de déflagration rendent l'hydrogène particulièrement délicat à utiliser dans le contexte d'une turbomachine. En effet, la moindre fuite et accumulation de dihydrogène peut déclencher un incendie ou l'explosion de la turbomachine. Dans ce contexte, il est nécessaire de fournir un ensemble de régulation d'hydrogène pour une turbomachine qui soit sécurisé et qui permettent d'éviter la formation de poches de dihydrogène stagnant.

### EXPOSE DE L'INVENTION

Selon un premier aspect, l'invention propose une turbomachine d'aéronef selon la revendication 1, comprenant un ensemble de régulation de dihydrogène présentant au moins une zone de rétention de dihydrogène dans laquelle du dihydrogène s'accumule. L'ensemble comprend au moins une bougie disposée au niveau de ladite zone de rétention pour bruler au moins une partie de l'hydrogène accumulé.

Ladite au moins une bougie peut générer des micros étincelles en continu ou à une fréquence définie.

L'ensemble peut comprendre une pluralité de bougies, chaque bougie générant des micros étincelles à une fréquence définie, les fréquences de l'ensemble des bougies étant synchronisées.

Les fréquences de l'ensemble des bougies peuvent être synchronisées pour qu'il y ait toujours au moins une bougie émettant une micro étincelle.

L'ensemble peut comprendre des moyens de commande de ladite au moins une bougie, les moyens de commande peuvent permettre de moduler une puissance et la fréquence de ladite au moins une bougie et permettant de déclencher ou non ladite au moins une bougie. L'ensemble peut comprendre au moins un détecteur de dihydrogène permettant de détecter une accumulation de dihydrogène dans ladite zone de rétention.

Ledit au moins un détecteur de dihydrogène peut permettre de piloter les moyens de commande pour déclencher ladite au moins une bougie et moduler la puissance et la fréquence de ladite au moins une bougie en fonction d'une accumulation de dihydrogène détectée.

L'ensemble de régulation peut comprendre un détecteur de l'état ouvert ou fermé de vannes d'alimentation en dihydrogène.

Selon un deuxième aspect, l'invention concerne un aéronef comprenant au moins une turbomachine selon l'invention

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 est une représentation en schématique de la circulation de dihydrogène dans une turbomachine d'aéronef.
- La figure 2 est une représentation simplifiée en perspective de la circulation de dihydrogène dans une turbomachine d'aéronef.
- La figure 3 est un schéma d'un exemple d'une mode possible de fonctionnement d'un ensemble de régulation selon l'invention.

### DESCRIPTION DETAILLEE DE L'INVENTION

### Contexte d'une turbomachine

Selon un premier aspect, l'invention propose une turbomachine 1 d'aéronef comprenant un ensemble de régulation 10 de dihydrogène.

La turbomachine 1 peut être par exemple un turboréacteur d'avion à double flux bien connu de l'homme de l'art, comprenant de manière conventionnelle une soufflante (communément appelée « fan »), un compresseur, une chambre de combustion, une turbine haute pression et une turbine basse pression. Dans le cas de turbomachines à double flux, la soufflante a des dimensions importantes par rapport aux autres composants, et le flux d'air traversant notamment la chambre de combustion et les turbines haute et basse pression représente une faible portion du flux d'air total traversant la soufflante. Une partie du flux d'air traversant la soufflante est donc directement expulsé, tandis qu'une autre partie traverse le compresseur, la chambre de combustion, et les turbines haute et basse pression.

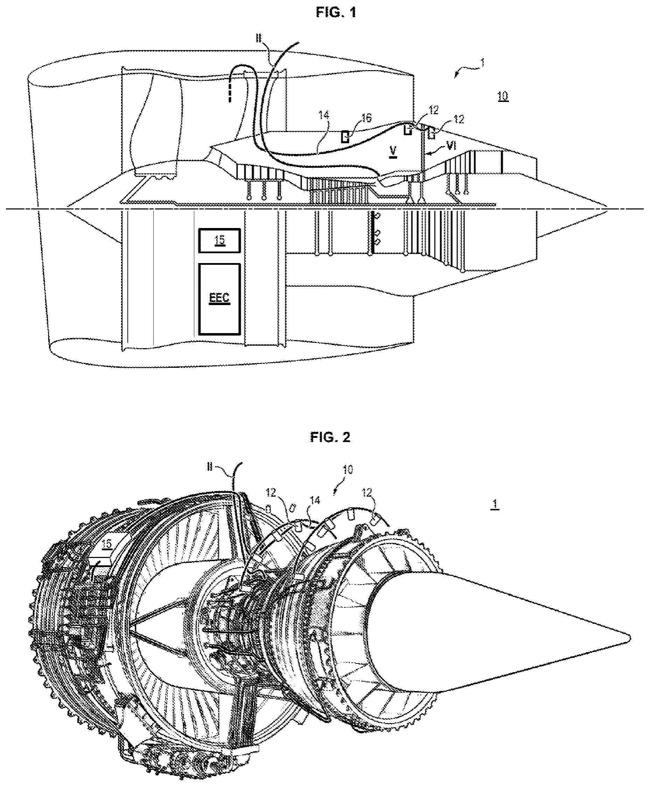

En sus, l'invention se place dans le contexte d'une turbomachine 1, dans laquelle le carburant est du dihydrogène. Typiquement, le dihydrogène peut être amené, par un réseau de canalisations/circuits d'alimentation dans la turbomachine 1 selon le trajet Il schématisé sur la figure 1.

Comme mentionné en introduction de la présente demande de brevet, il est probable que le dihydrogène va fuir et s'accumulera sous forme de poche gazeuse dans des zones de rétention de la turbomachine 1. Typiquement ces zones de rétentions peuvent être des régions concaves de la turbomachine 1 vers lesquelles le dihydrogène va converger et s'accumuler, et on peut les prévoir connaissant la disposition du circuit de dihydrogène et l'architecture interne de la turbomachine 1. Certaines zones, telles que la zone de rétention V représentée sur la figure 1 peuvent être particulièrement critiques du fait du risque d'explosion lié à la concentration d'une poche de dihydrogène dans cette zone de rétention V.

Il est précisé qu'à titre d'exemple, la description qui va suivre est faite en situant l'ensemble 10 dans la zone de rétention V. Néanmoins, il est bien entendu que l'ensemble 10 peut être positionné dans d'autres zones de la turbomachine en fonction des besoins, des fuites de dihydrogène et des risques identifiés.

### Ensemble de régulation d'hydrogène

L'ensemble 10 de régulation de dihydrogène comprend principalement une (ou plusieurs) bougie 12 disposée au niveau de la zone de rétention V pour bruler au moins une partie du dihydrogène accumulé. Les bougies 12 sont reliées par un harnais 14 assurant l'alimentation électrique des bougies 12. L'ensemble de régulation 10 permet très astucieusement de sécuriser la présence du dihydrogène dans la turbomachine 1. En effet, comme indiqué précédemment, il est quasiment certain que du dihydrogène fuira dans la turbomachine 1. Plutôt que d'essayer de prévenir une fuite qui semble inéluctable, l'ensemble de régulation 10 permet de s'adapter à la présence de fuite en brulant petit à petit le dihydrogène qui s'accumule dans des zones de rétentions (comme la zone V). Ainsi, l'ensemble de régulation 10 permet d'éviter la formation d'une poche de dihydrogène qui pourrait constituer un risque d'explosion (il est estimé qu'une poche devient dangereuse dès que la concentration en dihydrogène est supérieure ou égale à 2%).

Tel que cela est schématisé sur la figure 2, les bougies 12 peuvent être positionnées de manière circonférentielle dans la zone de rétention V. Cette disposition permet de garantir une combustion optimale de l'hydrogène présent dans la zone de rétention V.

Plus précisément, le positionnement des bougies 12 peut être effectuée en commençant par identifier les régions de rétention d'hydrogène, en fonction du circuit d'alimentation en dihydrogène, de la géométrie de la turbomachine 1, et de l'architecture du circuit de ventilation. Typiquement une zone de rétention V peut se constituer dans une région concave de la turbomachine 1 à proximité du circuit d'alimentation en dihydrogène. Puis, dans ces régions il est déterminé une zone de rétention V dans laquelle le dihydrogène peut être brulé sans risque. Pour chaque zone de rétention ainsi déterminé, la vitesse et le volume d'accumulation de dihydrogène peuvent être déterminés. Cette disposition permet d'éventuellement écarter certaines zones de rétention dans lesquelles le dihydrogène ne s'accumulerait que très faiblement. De plus, cette disposition permet aussi de dimensionner le nombre de bougies 12 nécessaires dans une zone de rétention. Les bougies 12 peuvent ensuite être installées dans la zone de rétention V. Dans l'exemple ici présenté, une paroi VI coupe la zone de rétention V en deux volumes distincts. Cette architecture spécifique impose la présente d'une double rampe de bougies 12. En d'autres termes, cette architecture spécifique crée deux sous-zones de rétention et impose de positionner des bougies 12 dans chacune de ces sous-zone de rétention.

Les bougies 12 peuvent être des bougies connues, telles que des bougies d'allumage de moteur thermique. Les bougies 12 sont adaptées pour générer des micros étincelles en continu ou à une fréquence définie. D'une manière préférentielle, les bougies 12 peuvent générer des micros-étincelles à une fréquence pouvant être comprise par exemple entre 1.5 et 2Hz dans le cas d'un fonctionnement en continu, ou à une fréquence comprise entre 3 et 4 Hz pendant une durée limitée (typiquement 10 secondes).

Typiquement, chaque bougie 12 comprend des électrodes. Les électrodes sont des conducteurs électriques reliés indirectement à une source d'alimentation électrique. L'application d'une haute tension aux bornes des électrodes permet la génération d'une micro étincelle.

La micro étincelle qui permet la combustion du dihydrogène correspond à la formation d'un arc électrique, c'est-à-dire un canal conducteur composé de molécules ionisées.

D'une manière avantageuse, les fréquences de l'ensemble des bougies 12 peuvent être synchronisées pour qu'il y ait toujours au moins une bougie émettant une micro étincelle. Cette synchronisation particulière permet très avantageusement d'avoir toujours une étincelle brulant du dihydrogène, tout en évitant un allumage massif de plusieurs bougies en même temps, qui pourrait provoquer une explosion. En d'autres termes, la synchronisation des bougies est réglée de sorte qu'il y ait toujours au moins une bougie émettant une micro étincelle permet de bruler en permanence du dihydrogène et de quantifier la quantité de dihydrogène brulé en fonction du nombre de bougies 12 allumées en même temps. En outre d'une manière avantageuse, la fréquence de chaque bougie 12 peut aussi être réglée en fonction de la localisation de la bougie 12. Ainsi, une bougie 12 positionnée dans une zone dans laquelle le dihydrogène s'accumule rapidement pourra avoir une fréquence d'allumage plus élevée qu'une bougie 12 présente dans une zone dans laquelle le dihydrogène s'accumule plus lentement.

En outre, l'ensemble de régulation 10 peut comprendre des moyens de commande 15 des bougies 12. Les moyens de commande 15 permettent d'allumer et de moduler une puissance et la fréquence de chaque bougie 12. En d'autres termes, les moyens de commande 15 permettent de commander la génération d'une micro étincelle et son intensité (i.e. la puissance émise par la bougie 12 pour générer la micro étincelle). Tel que cela sera décrit ci-après, la commande de la puissance de la bougie 12 permet d'ajuster l'intensité de la combustion de du dihydrogène. Schématiquement, plus de puissance est fournie à la bougie 12, plus la micro étincelle générée est intense et donc, plus la combustion sera intense. Par combustion intense, il est entendu qu'une quantité importante de dihydrogène sera brulée avec une seule micro étincelle. En d'autres termes, plus la micro étincelle est intense, plus la réaction chimique de combustion, engendrée par cette micro étincelle, brule le dihydrogène. Typiquement, les bougies 12 peuvent fournir une énergie comprise entre 0.01 mJ et 1J, et plus préférentiellement, l'énergie délivrée se situe aux alentours de 10mJ. Le pilotage de la puissance de la bougie 12 est une disposition particulièrement avantageuse de l'invention. En effet, tel que cela sera décrit ci-après, cela permet d'ajuster la puissance pour bruler une quantité optimale de dihydrogène sans risquer déclencher une explosion.

Typiquement, les moyens de commande 15 peuvent comprendre un microcontrôleur adapté pour recevoir des données et piloter les bougies 12 en fonction des données reçues.

De plus, l'ensemble de régulation 1 peut comprendre un détecteur de dihydrogène 16 permettant de détecter une accumulation de dihydrogène dans la zone de rétention V. Il est précisé que par mesure d'une accumulation de dihydrogène, il est entendu la mesure de la présence de dihydrogène (mesure binaire de présence ou non) ou la mesure d'une concentration en dihydrogène. Selon une disposition particulière, le ou chaque détecteur de dihydrogène 16 est installé dans une zone dans laquelle il peut y avoir du dihydrogène (typiquement, la zone de rétention V), et dans laquelle des bougies 12 sont installées. Ainsi, les zone d'installation du ou de chaque capteur peuvent être des zones dans lesquelles une accumulation de dihydrogène peut se réaliser, ou peuvent être sur des chemins de fuite d'hydrogène (entre les canalisations et les poches ou les sorties de ventilation). En sus, chaque détecteur est installé à une distance déterminée d'une bougie 12, pour ne pas être endommagés lors de l'émission de l'étincelle (distance dépendant du fournisseur du détecteur).

Selon une disposition avantageuse, le détecteur de dihydrogène 16 permet de piloter les moyens de commande 15 pour déclencher une ou plusieurs bougie(s) 12 et en moduler la puissance et la fréquence en fonction d'une accumulation de dihydrogène détectée. Tel que cela sera décrit ci-après, le détecteur peut être utilisé pour piloter les bougies 12 de manière binaire en allumant les bougies 12 dès que du dihydrogène est détecté et en les éteignant en l'absence de dihydrogène. Selon un autre mode de réalisation qui sera aussi développé ci-après, le détecteur peut permettre de piloter la fréquence d'allumage des bougies 12 en fonction d'une concentration mesurée de dihydrogène.

En outre, l'ensemble de régulation 1 peut comprendre des détecteurs de l'état (ouvert ou fermé) de vannes d'alimentation en dihydrogène de la turbomachine 1. Tel que cela sera décrit ci-après, cette disposition permet de déterminer si la turbomachine 1 est en fonctionnement ou non et d'adapter l'allumage des bougies en conséquence.

### Fonctionnement et pilotage de l'ensemble de régulation d'hydrogène

En fonctionnement, les moyens de commande 15 reçoivent des informations sur l'état des vannes d'alimentation en dihydrogène. La connaissance de l'état des vannes d'alimentation (ouvert ou fermé) permet de déterminer l'état de fonctionnement de la turbomachine 1. Ainsi, schématiquement, si les vannes d'alimentation sont ouvertes, la turbomachine 1 est en fonctionnement et si les vannes d'alimentation sont fermées la turbomachine 1 est à l'arrêt.

La détermination de l'état de fonctionnement de la turbomachine 1 permet aux moyens de commande 15 d'ajuster le pilotage des bougies 12. En effet, même quand la turbomachine 1 est à l'arrêt, il peut être intéressant de déclencher les bougies 12 pour, par exemple, bruler du dihydrogène résiduel qui pourrait demeurer dans la zone de rétention V.

Si l'ensemble de régulation 10 de dihydrogène intègre des détecteurs de dihydrogènes 19, ceux-ci peuvent mesurer la présence d'hydrogène ou une concentration en dihydrogène dans la zone de rétention V. Dans le cas d'une mesure de concentration en dihydrogène celle-ci peut être comparée à une valeur seuil à partir de laquelle les moyens de commande 15 déclenchent les bougies 12. Comme indiqué précédemment, les bougies 12 peuvent être déclenchées pour une concentration d'environ 2% en dihydrogène. Plus précisément, les bougies maintiennent préférentiellement une concentration en dihydrogène inférieure ou égale à 2% dans chaque zone de rétention. Si la concentration en dihydrogène atteint 8%, alors, le gaz présentant cette concentration est dans une plage déflagrative. Aussi, par mesure de sécurité, les bougies 12 cessent de fonctionner si la concentration en dihydrogène atteint 8% (dans ce cas une alarme sera déclenchée).

De plus la mesure d'une concentration en dihydrogène peut aussi être utilisée pendant la génération de micro étincelles par les bougies 12, pour ajuster la fréquence et la puissance des micros étincelles.

Ainsi, plus la concentration en dihydrogène est importante, plus la fréquence de génération des micros étincelles peut être élevée.

Inversement, plus la concentration en dihydrogène diminue, plus la fréquence de génération des micros étincelles peut diminuer.

Il est précisé que le pilotage de la fréquence et de la puissance des micro étincelles en fonction de la concentration en dihydrogène peut permettre de maximiser la puissance et la fréquence tout en conservant ces paramètres en deçà de valeurs à risques au-delà desquelles une explosion pourrait être déclenchée. En d'autres termes, piloter la fréquence et la puissance des micros étincelles en fonction de la concentration en dihydrogène peut permettre d'avoir toujours une combustion optimale du dihydrogène présent dans la zone de rétention V, sans que cette combustion puisse devenir dangereuse (c'est-à-dire en conservant un taux de dihydrogène inférieur ou égal à 8%).

Le pilotage des bougies 12 en fréquence et en puissance permet d'utiliser distinctement ces deux paramètres en fonction de l'état de la turbomachine et de la concentration en dihydrogène.

En fonction des différentes données entrantes (état des vannes d'alimentation et concentration en hydrogène), les moyens de commande pilotent la mise en marche, la puissance et la fréquence des bougies.

Ce pilotage est une disposition technique particulièrement avantageuse de l'invention qui permet d'ajuster au mieux la puissance et la fréquence des bougies en fonction de l'état de la turbomachine 1 et de la concentration en dihydrogène.

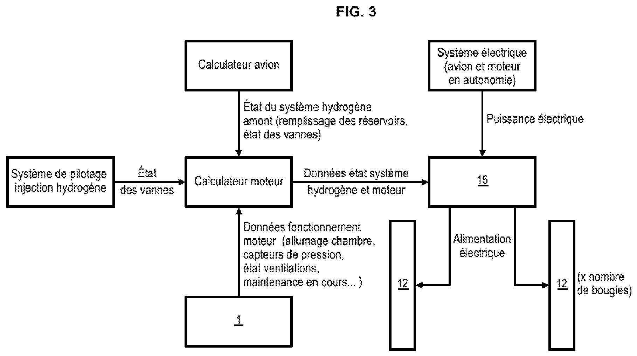

Le pilotage des bougies est schématisé sur la figure 3 qui présente un exemple de réalisation de pilotage des bougies 12.

En outre, selon des dispositions supplémentaires particulièrement avantageuses, le pilotage des bougies 12 peut être accompagne d'un système d'alarme permettant d'émettre une alarme dans le cockpit de l'aéronef en fonction d'une concentration en dihydrogène. Selon une disposition supplémentaire, le pilotage de bougies 12 peut être complété d'un système d'inertage comprenant par exemple des buses d'inertage. Ce système d'inertage peut par exemple être déclenché à partir d'une concentration seuil. Typiquement, le pilotage peut fonctionner en utilisant plusieurs seuils distincts : un seuil de déclenchement des bougies, un seuil d'arrêt des bougies, de déclenchement d'une alarme et de déclenchement d'un système d'inertage.

### Aéronef

Selon un autre aspect, l'invention concerne un aéronef comprenant au moins une turbomachine 1.

## Revendications

1. Turbomachine (1) d'aéronef comprenant un ensemble de régulation (10) de dihydrogène présentant au moins une zone de rétention (V) de dihydrogène dans laquelle du dihydrogène s'accumule, **caractérisée en ce que** l'ensemble comprend au moins une bougie (12) disposée au niveau de la zone de rétention (V) pour bruler au moins une partie de l'hydrogène accumulé.

2. Turbomachine (1) selon la revendication 1, dans lequel ladite au moins une bougie (12) est configurée pour générer des micros étincelles en continu ou à une fréquence définie.

3. Turbomachine (1) selon la revendication 2, comprenant une pluralité de bougies (12), chaque bougie (12) étant configurée pour générer des micros étincelles à une fréquence définie, les fréquences de l'ensemble des bougies (12) étant synchronisées.

4. Turbomachine (1) selon la revendication 3 dans lequel les fréquences de l'ensemble des bougies (12) sont synchronisées pour qu'il y ait toujours au moins une bougie (12) émettant une micro étincelle.

5. Turbomachine (1) selon l'une quelconque des revendications 2 à 4, comprenant des moyens de commande (15) de ladite au moins une bougie (12), les moyens de commande (15) permettant de moduler une puissance et la fréquence de ladite au moins une bougie (12) et permettant de déclencher ou non ladite au moins une bougie (12).

6. Turbomachine (1) selon l'une quelconque des revendications 1 à 5, comprenant au moins un détecteur de dihydrogène permettant de détecter une accumulation de dihydrogène dans ladite zone de rétention (V).

7. Turbomachine (1) selon les revendications 5 et 6 en combinaison dans lequel ledit au moins un détecteur de dihydrogène permet de piloter les moyens de commande (15) pour déclencher ladite au moins une bougie (12) et moduler la puissance et la fréquence de ladite au moins une bougie (12) en fonction d'une accumulation de dihydrogène détectée.

8. Turbomachine (1) selon l'une des revendication 6 ou 7, comprenant un détecteur de l'état ouvert ou fermé de vannes d'alimentation en dihydrogène.

9. Aéronef comprenant au moins une turbomachine (1) selon l'une quelconque des revendications 1 à 8.

## Patentansprüche

1. Flugzeugturbinentriebwerk (1), umfassend eine Dihydrogensteuerungsanordnung (10), die mindestens eine Dihydrogen-Rückhaltezone (V) aufweist, in der sich Dihydrogen ansammelt, **dadurch gekennzeichnet, dass** die Anordnung mindestens eine Zündkerze (12) umfasst, die im Bereich der Rückhaltezone (V) angeordnet ist, um mindestens einen Teil des angesammelten Dihydrogens zu verbrennen.

2. Turbinentriebwerk (1) nach Anspruch 1, wobei die mindestens eine Zündkerze (12) ausgelegt ist, um kontinuierlich oder mit einer definierten Frequenz Mikrofunken zu erzeugen.

3. Turbinentriebwerk (1) nach Anspruch 2, umfassend eine Vielzahl von Zündkerzen (12), wobei jede Zündkerze (12) ausgelegt ist, um Mikrofunken mit einer definierten Frequenz zu erzeugen, wobei die Frequenzen aller Zündkerzen (12) synchronisiert sind.

4. Turbinentriebwerk (1) nach Anspruch 3, wobei die Frequenzen aller Zündkerzen (12) so synchronisiert sind, dass immer mindestens eine Zündkerze (12) einen Mikrofunken abgibt.

5. Turbinentriebwerk (1) nach einem der Ansprüche 2 bis 4, umfassend Mittel (15) zum Steuern der mindestens einen Zündkerze (12), wobei die Steuermittel (15) gestatten, eine Leistung und die Frequenz der mindestens einen Zündkerze (12) zu modulieren und gestatten, die mindestens eine Zündkerze (12) auszulösen oder nicht.

6. Turbinentriebwerk (1) nach einem der Ansprüche 1 bis 5, umfassend mindestens einen Dihydrogensensor, der gestattet, eine Ansammlung von Dihydrogen in der Rückhaltezone (V) zu ermitteln.

7. Turbinentriebwerk (1) nach den Ansprüchen 5 und 6 in Kombination, wobei der mindestens eine Dihydrogensensor gestattet, die Steuermittel (15) zu steuern, um die mindestens eine Zündkerze (12) auszulösen und um die Leistung und die Frequenz der mindestens einen Zündkerze (12) in Abhängigkeit von einer ermittelten Dihydrogenansammlung zu modulieren.

8. Turbinentriebwerk (1) nach einem der Ansprüche 6 oder 7, umfassend einen Sensor des geöffneten oder geschlossenen Zustands von Dihydrogen-Zufuhrventilen.

9. Flugzeug, das mindestens ein Turbinentriebwerk (1) nach einem der Ansprüche 1 bis 8 umfasst.

## Claims

1. Aircraft turbomachine (1) comprising a dihydrogen regulation assembly (10) comprising at least one dihydrogen retention zone (V) in which dihydrogen accumulates, **characterized in that** the assembly comprises at least one spark plug (12) disposed at the retention zone (V) for burning at least part of the accumulated hydrogen.

2. Turbomachine (1) according to claim 1, wherein said at least one spark plug (12) is configured to generate micro-sparks continuously or at a defined frequency.

3. Turbomachine (1) according to claim 2, comprising a plurality of spark plugs (12), each spark plug (12) being configured to generate micro-sparks at a defined frequency, the frequencies of all the spark plugs (12) being synchronized.

4. Turbomachine (1) according to claim 3, wherein the frequencies of all the spark plugs (12) are synchronized so that there is always at least one spark plug (12) emitting a micro spark.

5. Turbomachine (1) according to any of claims 2 to 4, comprising means (15) for controlling said at least one spark plug (12), the control means (15) allowing the power and frequency of said at least one spark plug (12) to be modulated and allowing said at least one spark plug (12) to be triggered or not.

6. Turbomachine (1) according to any of claims 1 to 5, comprising at least one dihydrogen detector for detecting an accumulation of dihydrogen in said retention zone (V).

7. Turbomachine (1) according to claims 5 and 6 in combination, wherein said at least one dihydrogen detector enables the control means (15) to be controlled in order to trigger said at least one spark plug (12) and modulate the power and frequency of said at least one spark plug (12) as a function of a detected accumulation of dihydrogen.

8. Turbomachine (1) according to one of claims 6 or 7, comprising a detector for the open or closed state of dihydrogen supply valves.

9. Aircraft comprising at least one turbomachine (1) according to any of claims 1 to 8.
